# EUROPÄISCHE PATENTSCHRIFT

(11) **EP 0 988 955 B1**
(45) Veröffentlichungstag und Bekanntmachung des Hinweises auf die Patenterteilung: **19.03.2003**
(21) Anmeldenummer: 99114900.6
(22) Anmeldetag: 30.07.1999
(51) Int. Cl.: B29C 47/10, B29C 47/74

(54) **Verfahren zur Einspeisung von Additiven in einen Polymerschmelzstrom**
Process for feeding additives in a polymer melt stream
Procédé pour introduire des additifs dans un courant de polymère fondu

(30) Priorität: 10.09.1998 DE 19841376
(43) Veröffentlichungstag der Anmeldung: 29.03.2000
(73) Patentinhaber: Zimmer Aktiengesellschaft, 60388 Frankfurt am Main (DE)
(72) Erfinder: Finder, Horst, 63110 Rodgau (DE)

(56) Entgegenhaltungen:
- EP-A- 0 532 988
- DE-A- 3 038 580
- DE-A- 4 039 857
- US-A- 4 132 509

## Beschreibung

Die Erfindung bezieht sich auf ein Verfahren zur Einspeisung von Additiven in einen Polymerschmelzestrom, bei dem dem Polymerschmelzestrom ein Teilstrom entnommen und dieser Teilstrom mit Additiven vermischt wird und der mit den Additiven vermischte Teilstrom dem Polymerschmelzestrom erneut zugeführt wird.

Die Einspeisung von Additiven in einen Polymerschmelzestrom ist bekannt. In Chemiefasern/Textilindustrie, 36./88. Jahrgang, Januar 1986, Seiten 24 bis 29, wird ein Verfahren zur Einspeisung von Additiven in einen Polymerschmelzestrom beschrieben, bei dem einem aus einem Endreaktor oder Extruder austretenden unmodifizierten Hauptschmelzestrom ein Teilstrom von ca. 5 bis 10 % entnommen und über einen, mit speziellen Knetelementen ausgerüsteten Zweiwellenextruder geleitet wird. Mit einem kontinuierlichen Dosiersystem werden geeignete Additive dem Zweiwellenextruder eingeführt und homogen in der Schmelze eingearbeitet. Anschließend wird die mit Additiven beladene Schmelze wieder in den Hauptschmelzestrom rückvermischt, wobei eine gleichmäßige Verteilung der Additive durch statische Mischelemente erreicht wird.

In der DE-PS 4039857 werden ein Verfahren und eine Vorrichtung zur direkten, kontinuierlichen Modifizierung von Polymerschmelzen beschrieben. Dabei wird einem Hauptschmelzestrom ein wahlweise zu modifizierender Teilschmelzestrom entnommen und in einen Doppelwellenextruder geleitet. Die Additive gelangen über eine Förderpumpe in den Doppelwellenextruder. Der modifizierte Teilschmelzestrom wird anschließend dem Hauptschmelzestrom wieder zugeführt.

In der EP-B-0 532 988 wird ein Verfahren zur Herstellung statistischer Copolyester beschrieben. Nach einer bevorzugten Ausführungsform ist es dabei vorgesehen, daß ein Polyester (B) und 10 bis 50 Gew.-% eines Polyesters (A) einem Mischextruder zugeführt werden, und das Extrudat anschließend in einem statischen Mischer mit den restlichen 90 bis 50 Gew.-% des Polyesters (A) vermischt wird.

Aus Franz Fourné, Synthetische Fasern, Hanser-Verlag, 1995, Seiten 316 bis 318, ist es bekannt, Planetenradspinnpumpen zum Transport von Polymerschmelzen einzusetzen. Diese Planetenradpumpen besitzen in der Regel 3 bis 8 Pumpenzahnräder, die in einer Ebene um ein Planetenzahnrad, das als Antrieb dient, angeordnet sind. Der einzige Schmelzeeintritt liegt in Form eines Strömungskanals in der Mitte und jeder der n-Ausgänge in je einem Zahnradzwickel.

Der Erfindung liegt die Aufgabe zugrunde, ein Verfahren zur-Einspeisung von Additiven in einen Polymerschmelzestrom zu schaffen, bei dem bereits eine homogene Vormischung von Additiven und einem Teil der Polymerschmelze erreicht wird. Dies soll auch dann sichergestellt sein, wenn die Additive andere rheologische Eigenschaften als die Polymerschmelze aufweisen.

Die der Erfindung zugrundeliegende Aufgabe wird dadurch gelöst, daß der unvermischte Teilstrom vollständig oder in maximal (n-1) weiteren Teilströmen jeweils direkt einem bis maximal (n-1) Pumpenzahnrädern, einer Planetenradpumpe mit n Pumpenzahnrädern zugeführt wird, die Additive gleichzeitig jeweils unvermischt mindestens einem Pumpenzahnrad der Planetenradpumpe direkt zugeführt werden, der mit den Additiven vermischte Teilstrom am Eintritt der Planetenradpumpe mittig aus der Planetenradpumpe abgeführt und in den Polymerschmelzestrom eingebracht wird. Als Polymere werden dabei beispielsweise Polyester, Polyamide, Polyurethane oder Polyolefine eingesetzt. Als Additive kommen beispielsweise Wärme- und UV-Stabilisatoren, Gleitmittel, Mischpolymere oder Farbkonzentrate zum Einsatz. n liegt im Bereich von 2 bis 10. Die Menge des Teilstroms umfaßt in der Regel 2 bis 10 % vom Polymerschmelzestrom. Der mit den Additiven vermischte Teilstrom wird am Eintritt der Planetenradpumpe abgeführt, die Planetenradpumpe wird somit entgegen der sonst üblichen Strömungsrichtung von den Austritten zum Eintritt hin betrieben. Es hat sich in überraschender Weise gezeigt, daß die Additive homogen am Austritt der Planetenradpumpe mit dem Teilstrom des Polymerschmelzestroms gut vermischt werden. Dabei ist es möglich, verschiedene Additive den Pumpenzahnrädern der Planetenradpumpe zuzuführen und in den aufgeteilten Teilstrom des Polymerschmelzestroms homogen einzubringen. Dies ist auch dann in vorteilhafter Weise möglich, wenn zwischen den Additiven untereinander oder zwischen den Additiven einerseits und der Polymerschmelze andererseits große Unterschiede in den rheologischen Eigenschaften bestehen. Der mit den Additiven vermischte Teilstrom wird anschließend in den Polymerschmelzestrom zurückgeführt. Dieser kann danach in besonders vorteilhafter Weise durch einen statischen Mischer geleitet werden. Die homogen mit dem Teilstrom vermischten Additive werden relativ schnell im Polymerschmelzestrom homogen verteilt, was durch die vorteilhafte Vormischung von Additiven und dem Teilstrom des Polymerschmelzestroms erreicht wird. Aufgrund dieser Vormischung ist es auch in vorteilhafter Weise möglich, die Mischstrecke des gegebenenfalls angeordneten statischen Mischers relativ kurz zu wählen.

Eine bevorzugte Ausgestaltung der Erfindung besteht darin, daß n 3 bis 8 beträgt. Dadurch läßt sich die homogene Vermischung in besonders vorteilhafter Weise auch dann realisieren, wenn mehrere Additive zum Einsatz kommen, wobei der konstruktive Aufwand relativ gering ist.

Gemäß einer weiteren bevorzugten Ausgestaltung der Erfindung wird der mit den Additiven vermischte Teilstrom nach dem Austritt aus der Planetenradpumpe durch einen statischen Mischer geleitet und danach in den Polymerschmelzestrom eingebracht. Durch diese Maßnahme wird die homogene Vermischung auf relativ einfache Weise verstärkt, was sich vorteilhaft auf das homogene Einbringen in den Polymerschmelzestrom auswirkt.

Nach einer weiteren bevorzugten Ausgestaltung der Erfindung ist vorgesehen, daß die gleichzeitig unvermischt mindestens einem Pumpenzahnrad zugeführten Additive in der Planetenradpumpe beim Zusammenführen mit den Polymer-Teilströmen zentrisch zur Austrittsachse der Pumpe geführt werden. Die homogene Vermischung erfolgt auf diese Weise relativ schnell auf kurzer Strecke.

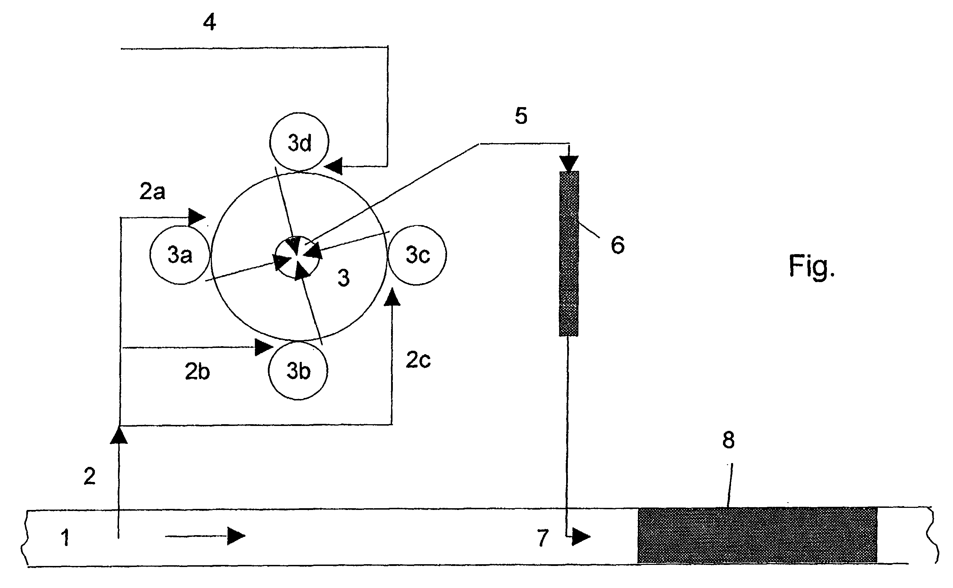

Die Erfindung wird nachfolgend anhand der Zeichnung (Fig.) näher und beispielhaft erläutert.

Fig. zeigt ein vereinfachtes, schematisches Verfahrensfließbild des Verfahrens zur Einspeisung von Additiven in einen Polymerschmelzestrom.

In Fig. ist das Verfahren zur Einspeisung von Additiven (4) in einen Polymerschmelzestrom (1) vereinfacht schematisch dargestellt. Dem Polymerschmelzestrom (1) wird ein Teilstrom (2) entnommen und in drei weitere Teilströme (2a, 2b, 2c) aufgeteilt. Jeder weitere Teilstrom (2a, 2b, 2c) wird jeweils einem Pumpenzahnrad (3a, 3b, 3c) einer Planetenradpumpe (3) zugeführt. Die Planetenradpumpe (3) weist vier Pumpenzahnräder (3a, 3b, 3c, 3d) auf. Die Additive (4) werden dem einen Pumpenzahnrad (3d) zugeführt. In der Planetenradpumpe (3) kommt es zu einer homogenen Vormischung der Additive (4) mit dem auftgeteilten Teilstrom (2). Der mit den Additiven vermischte Teilstrom (5) wird am Eintritt der Planetenradpumpe (3) mittig aus der Planetenradpumpe (3) abgeführt und in den Polymerschmelzestrom (1) eingebracht. Vor dem Einbringen des mit den Additiven vermischten Teilstroms (5) in den Polymerschmelzestrom (1), wird dieser mit den Additiven vermischte Teilstrom (5) durch einen statischen Mischer (6) geleitet, was sich zusätzlich vorteilhaft auf die homogene Vormischung auswirkt. Das Einbringen des mit den Additiven (4) vermischten Teilstroms (5) in den Polymerschmelzestrom (1) erfolgt über eine Düse (7). Weitere statische Mischer (8) verstärken die homogene Einmischung des mit den Additiven vermischten Teilstroms (5) in den Polymerschmelzestrom (1).

Nach einer Variante des Verfahrens ist es möglich, verschiedene Additive (4) zwei Pumpenzahnrädern (3c, 3d) zuzuführen und den Teilstrom (2) nur in zwei weitere Teilströme (2a, 2b) aufzuteilen. Der aufgeteilte Teilstrom (2) kann dabei gleichzeitig vorteilhaft mit zwei verschiedenen Additiven (4) homogen vermischt werden (nicht dargestellt).

## Patentansprüche

1. Verfahren zur Einspeisung von Additiven (4) in einen Polymerschmelzestrom (1), bei dem dem Polymerschmelzestrom (1) ein Teilstrom (2) entnommen und dieser Teilstrom (2) mit Additiven (4) vermischt wird und der mit den Additiven (4) vermischte Teilstrom (5) dem Polymerschmelzestrom (1) erneut zugeführt wird, **dadurch gekennzeichnet, daß** der unvermischte Teilstrom (2) vollständig oder in maximal (n-1) weiteren Teilströmen (2a, 2b, 2c) jeweils direkt einem bis maximal (n-1) Pumpenzahnrädern (3a, 3b, 3c) einer Planetenradpumpe (3) mit n Pumpenzahnrädern (3a, 3b, 3c, 3d) zugeführt wird, die Additive (4) gleichzeitig jeweils unvermischt mindestens einem Pumpenzahnrad (3d) der Planetenradpumpe (3) direkt zugeführt werden, der mit den Additiven vermischte Teilstrom (5) am Eintritt der Planetenradpumpe (3) mittig aus der Planetenradpumpe (3) abgeführt und in den Polymerschmelzestrom (1) eingebracht wird.

2. Verfahren nach Anspruch 1, **dadurch gekennzeichnet, daß** n 3 bis 8 beträgt.

3. Verfahren nach Anspruch 1 oder Anspruch 2, **dadurch gekennzeichnet, daß** der mit den Additiven (4) vermischte Teilstrom (5) nach dem Austritt aus der Planetenradpumpe (3) durch einen statischen Mischer (6) geleitet und danach in den Polymerschmelzestrom (1) eingebracht wird.

4. Verfahren nach einem der Ansprüche 1 bis 3, **dadurch gekennzeichnet, daß** die gleichzeitig unvermischt mindestens einem Pumpenzahnrad (3d) zugeführten Additive (4) in der Planetenradpumpe (3) beim Zusammenführen mit den Polymer-Teilströmen zentrisch zur Austrittsachse der Pumpe geführt werden.

## Claims

1. Method for feeding additives (4) into a polymer melt stream (1), in which a partial stream (2) is removed from the polymer melt stream (1) and this partial stream (2) is mixed with additives (4) and the partial stream (5) mixed with the additives (4) is again supplied to the polymer melt stream (1), **characterised in that** the unmixed partial stream (2) is supplied completely or in a maximum (n-1) of further partial streams (2a, 2b, 2c) directly to one or a maximum of (n-1) respective pump gear wheels (3a, 3b, 3c) of a planet wheel pump (3) with n pump gear wheels (3a, 3b, 3c, 3d), the additives (4) being directly supplied simultaneously, unmixed in each case, to at least one pump gear wheel (3d) of the planet wheel pump (3), the partial stream (5) mixed with the additives being removed centrally from the planet wheel pump (3) at the entrance of the planet wheel pump (3) and being introduced into the polymer melt stream (1).

2. Method according to claim 1, **characterised in that** n is 3 to 8.

3. Method according to claim 1 or claim 2, **characterised in that** the partial stream (5) mixed with the additives (4) after leaving the planet wheel pump (3) is guided through a static mixer (6) and is then introduced into the polymer melt stream (1).

4. Method according to any one of claims 1 to 3, **characterised in that** the additives (4) simultaneously supplied unmixed to at least one pump gear wheel (3d) are guided centrally to the exit axis of the pump on being brought together with the partial polymer streams in the planet wheel pump (3).

## Revendications

1. Procédé pour introduire des additifs (4) dans un courant de polymère fondu (1) dans lequel un courant partiel (2) est prélevé sur le courant de polymère fondu (1) et ce courant partiel (2) est mélangé avec des additifs (4) et le courant partiel (5) mélangé avec les additifs (4) est envoyé de nouveau dans le courant de polymère fondu (1), **caractérisé en ce que** le courant partiel (2) non mélangé est envoyé directement en totalité ou en (n-1) autres courants partiels (2a, 2b, 2c) au maximum à un à (n-1) pignons satellites de pompe (3a, 3b, 3c) au maximum d'une pompe à pignons satellites (3) ayant n pignons satellites de pompe (3a, 3b, 3c, 3d), les additifs (4) sont simultanément envoyés directement à l'état non mélangé à au moins un pignon satellite de pompe (3d) de la pompe à pignons satellites (3), le courant partiel (5) mélangé avec les additifs est extrait axialement de la pompe à pignons satellites (3) à l'entrée de la pompe à pignons satellites (3) et est introduit dans le courant de polymère fondu (1).

2. Procédé selon la revendication 1, **caractérisé en ce que** n est égal à 3 à 8.

3. Procédé selon la revendication 1 ou la revendication 2, **caractérisé en ce que** le courant partiel (5) mélangé avec les additifs (4) est amené à traverser un mélangeur statique (6) après la sortie de la pompe à pignons satellites (3) après quoi il est introduit dans le courant de polymère fondu (1).

4. Procédé selon l'une des revendications 1 à 3, **caractérisé en ce que** les additifs (4) introduits simultanément à l'état non mélangé dans au moins un pignon satellite (3d) dans la pompe à pignons satellites (3) sont envoyés avec les courants partiels de polymère de manière centrée à l'axe de sortie de la pompe.
